# FASCICULE DE BREVET EUROPEEN

(11) **EP 2 120 214 B1**
(45) Date de publication et mention de la délivrance du brevet: **25.07.2018**
(21) Numéro de dépôt: 09159463.0
(22) Date de dépôt: 05.05.2009
(51) Int. Cl.: G07C 3/00

(54) **Procédé de prévention de l'endommagement d'une pièce comprenant la construction d'un indicateur de fatigue**
Verfahren zum Verhindern einer Beschädigung eines Werkstücks, umfassend das Konstruieren eines Ermüdungsanzeigers
Method for preventing damage to a workpiece comprising the construction of a fatigue indicator

(30) Priorité: 16.05.2008 FR 0853172
(43) Date de publication de la demande: 18.11.2009
(73) Titulaire: PSA Automobiles SA, 78300 Poissy (FR)
(72) Inventeur: Garnier, François, 92370 CHAVILLE (FR); Le Dantec, Eric, 78650 BEYNES (FR); van Doorn, Antoine, 75014 PARIS (FR)
(74) Mandataire: Ménès, Catherine

(56) Documents cités:
- EP-A- 0 652 426
- WO-A-03/008925
- JP-A- 11 247 951
- JP-A- 59 204 740
- JP-A- 2005 249 597
- JP-A- 2005 315 581
- US-A1- 2001 034 581
- US-A1- 2005 193 810
- US-A1- 2006 228 214

## Description

L'invention concerne un procédé de prévention de l'endommagement d'une pièce, notamment de sa rupture, comprenant la construction d'un indicateur de fatigue de cette pièce.

Des procédés de construction d'un indicateur d'usure d'une pièce d'une transmission d'un véhicule automobile sont connus. Par exemple, un tel procédé est connu de US 2007 167 282.

Les indicateurs d'usure permettent d'anticiper la défaillance d'une pièce et donc de prendre à temps des mesures correctives. Toutefois, les défaillances d'une pièce ne sont pas simplement dues à son usure mécanique par frottement sur d'autres pièces. Par exemple, une pièce peut casser ou se fissurer sans pour autant avoir été usée au préalable par frottement sur une autre pièce. Le document JP2005249597 décrit un procédé et dispositif permettant d'évaluer la résistance à la fatigue d'une pièce soumise à des charges répétitives, par la mesure de sa température à sa surface, au calcul de l'amplitude de température et la comparaison avec des données mémorisées.

L'invention vise donc à proposer un indicateur de fatigue d'une pièce qui n'est pas nécessairement soumis à une usure par frottement. L'invention est définie par un procédé de prévention de l'endommagement d'une pièce d'un véhicule suivant les caractéristiques de la revendication indépendante 1. Différents modes de réalisation de ce procédé sont définis par les caractéristiques des revendications dépendantes.

Le procédé ci-dessus permet de supprimer les pannes des pièces de la chaîne de traction à kilométrage élevé tout en réduisant les performances du véhicule uniquement pour un nombre très limité de conducteurs.

Les modes de réalisation de ce procédé de prévention peuvent en outre comporter la mesure de la température subie par cette pièce, et la limitation instantanée de la puissance du véhicule en réponse à un dépassement par la température mesurée d'un second seuil prédéterminé.

L'invention permet d'obtenir un procédé de maintenance préventive comprenant la construction d'un indicateur de fatigue à l'aide du procédé de construction ci-dessus, et l'indication de la nécessité de remplacer cette pièce en réponse au dépassement par cet indicateur d'un seuil prédéterminé,

Ce procédé de maintenance préventive permet de remplacer une pièce avant que celle-ci ne provoque une panne.

Enfin, l'invention a également pour objet un dispositif de construction d'un indicateur de fatigue d'une pièce soumise à des variations de sollicitations thermiques et / ou mécaniques lors de son utilisation, dans lequel le dispositif comprend un module d'acquisition de mesure variations des sollicitations, subies par cette pièce, qui engendrent des contraintes thermomécaniques dans cette pièce, et un module apte à calculer la valeur de l'indicateur de fatigue thermique ou thermomécanique de cette pièce en fonction du nombre et de l'amplitude de ces variations de température mesurées, ainsi que du chargement mécanique associé.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un véhicule équipé d'un dispositif de construction d'indicateurs de fatigue de pièces de la chaîne de traction de ce véhicule,
- la figure 2 est une illustration schématique de différents modules permettant de construire des indicateurs de fatigue et d'utiliser ces indicateurs de fatigue pour prévenir l'endommagement d'une pièce,
- la figure 3 est un graphe d'une loi d'endommagement utilisée par l'un des modules de la figure 2,
- la figure 4 est un organigramme d'un procédé de prévention de l'endommagement d'une pièce et de maintenance préventive.

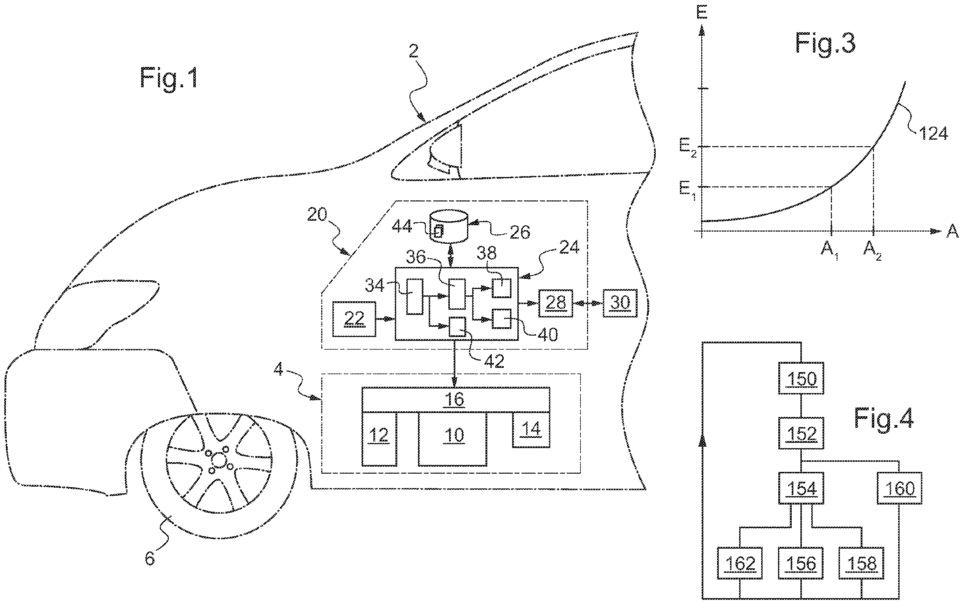

La figure 1 représente un véhicule 2. Par exemple, le véhicule 2 est un véhicule automobile tel qu'une voiture. Ce véhicule 2 est équipé d'un ensemble d'organes moteur 4 des roues motrices 6 du véhicule 2 incluant notamment un moteur 10 à combustion, un dispositif de démarrage tel un démarreur 12 et un turbocompresseur 14 propre à comprimer les gaz admis dans des chambres de combustion du moteur 10.

Cet ensemble 4 comprend également un ensemble 16 d'organes de commande du moteur 10, du démarreur 12 et du turbocompresseur 14. Par exemple, cet ensemble 16 comprend les organes de commande suivants :
- des injecteurs de carburant avec des moyens pour régler la quantité et l'instant d'injection de carburant dans chacune des chambres de combustion du moteur 10,
- une vanne papillon permettant de régler la quantité d'air admis dans chaque chambre de combustion lors de chaque cycle de combustion,
- un calculateur rapproché propre à commander la mise en marche du démarreur 12 pour démarrer le moteur 10, et
- un organe de commande du turbocompresseur 14 permettant d'ajuster la pression de l'air comprimé par ce turbocompresseur.

Cette liste d'organes faisant partie de l'ensemble 16 est donnée uniquement à titre d'exemple et n'est pas exhaustive.

Le véhicule 2 comprend également un dispositif 20 de prévention d'endommagement et de maintenance préventive des différentes pièces constituant l'ensemble 4. Plus précisément, ici, le dispositif 20 comprend :
- un ensemble 22 de capteurs,
- un calculateur électronique 24 raccordé au capteur 22,
- une mémoire 26 raccordée au calculateur 24, et
- un connecteur 28 destiné à être raccordé à une interface homme-machine 30.

Par exemple, l'ensemble 22 comprend les capteurs suivants :
- un capteur du régime du moteur 10 exprimé en nombre de tours par minute,
- un capteur de température et de pression de l'air en amont du répartiteur admission,
- un capteur de débit et de température des gaz d'admission,
- un capteur de la vitesse de déplacement du véhicule,
- un capteur d'état du groupe moto-ventilateur propre à indiquer si ce groupe est actuellement en marche ou au contraire à l'arrêt,
- un capteur de la température de l'eau de refroidissement du moteur 10,
- un capteur de la température de l'huile présente dans le carter du moteur 10,
- un capteur de la pression de suralimentation dans un collecteur d'admission du moteur 10,
- un capteur de la température des gaz d'échappement en entrée de la turbine du turbocompresseur,

Le calculateur 24 permet de construire un indicateur de fatigue pour différentes pièces de l'ensemble 4. Le calculateur 24 est ici de plus capable de limiter les performances du véhicule 2 en fonction de la valeur des différents indicateurs de fatigue pour prévenir tout endommagement d'une pièce de l'ensemble 4. Enfin, ce calculateur 24 est également apte à délivrer la valeur des indicateurs de fatigue construits à l'interface homme-machine 30 par l'intermédiaire du connecteur 28 afin que ces différentes valeurs puissent être utilisées pour déterminer quelles sont les pièces de l'ensemble 4 qui doivent être remplacées de façon préventive.

A cet effet, le calculateur 24 comprend un module 34 d'acquisition des différentes mesures réalisées par les capteurs de l'ensemble 22. Le module 24 est également apte à estimer, à partir de ces différentes mesures, d'autres grandeurs physiques représentatives de contraintes subies par les pièces de l'ensemble 4. Ce module 34 délivre les différentes mesures et estimations réalisées à l'entrée d'un module 36 d'indicateurs de fatigue. Le module 36 construit à partir de ces mesures et estimations des indicateurs de fatigue pour plusieurs pièces de la chaîne 4.

Un superviseur 38 du fonctionnement du moteur 10 réduit les performances de ce moteur en fonction de la valeur des indicateurs de fatigue des pièces du moteurs pour prévenir tout endommagement d'une de ces pièces. Un autre superviseur 40 limite les conditions de fonctionnement du démarreur 12 en fonction de la valeur actuelle des indicateurs de fatigue des pièces du démarreur. Enfin, le calculateur 24 comprend également un limiteur 42 propre à limiter immédiatement les performances du moteur 10 en fonction des mesures et estimations délivrées par le module 34.

Par exemple, le calculateur 24 est un calculateur électronique programmable apte à exécuter des instructions enregistrées sur un support d'enregistrement d'informations. Ici, à cet effet, le calculateur 24 est raccordé à la mémoire 26 qui contient les instructions nécessaires pour l'exécution du procédé de la figure 4. Cette mémoire 26 comprend notamment des lois 44 d'endommagement utilisées par le constructeur 36 pour construire la valeur actuelle des indicateurs de fatigue. De manière à limiter les performances du moteur 10 ou le fonctionnement du démarreur 12, le calculateur 24 est raccordé à l'ensemble 16 d'organes de commande de manière à pouvoir commander chacun de ces organes.

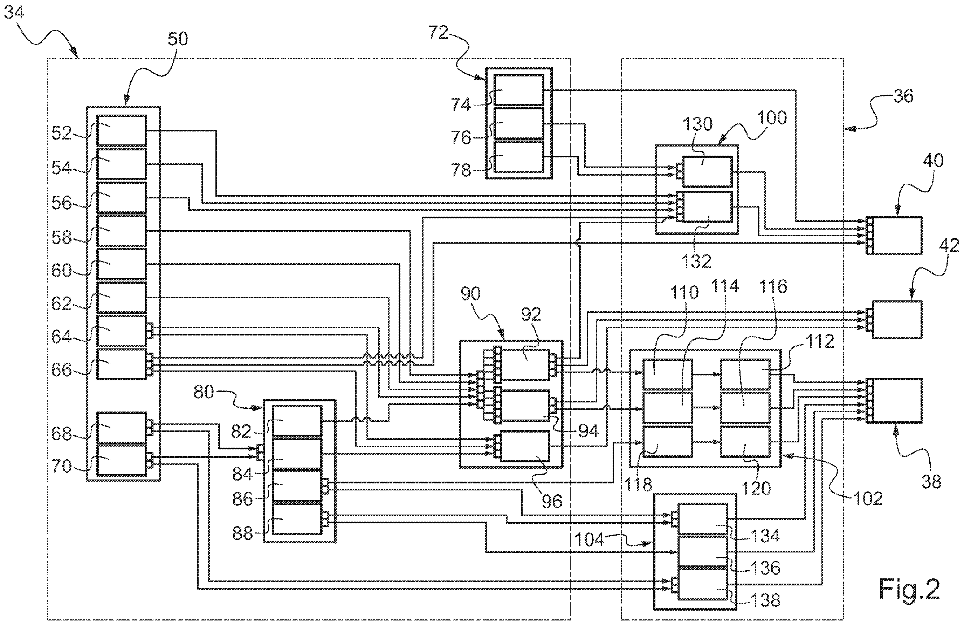

Un exemple plus précis d'architecture possible pour le calculateur 24 va maintenant être décrit en regard de la figure 2 qui montre que le module 34 comprend un sous-module 50 d'acquisition des mesures réalisées par les capteurs de l'ensemble 22. Par exemple, ce sous-module comprend
- un bloc 52 d'acquisition de la pression de suralimentation,
- un bloc 54 d'acquisition de la pression en entrée de la turbine du turbocompresseur 14,
- un bloc 56 d'acquisition du régime de la turbine du turbocompresseur 14,
- un bloc 58 d'acquisition de la vitesse du véhicule 2,
- un bloc 60 d'acquisition de l'état de fonctionnement du groupe moto-ventilateur,
- un bloc 62 d'acquisition du débit des gaz d'échappement du moteur 10,
- un bloc 64 d'acquisition de la température de l'eau de refroidissement du moteur 10,
- un bloc 66 d'acquisition de la température de l'huile du carter du moteur 10,
- un bloc 68 d'acquisition du régime du moteur 10, et
- un bloc 70 correspondant au couple moteur.

Le module 34 comporte également un sous-module 72 d'acquisition des mesures représentatives de l'état de fonctionnement du démarreur 12. Par exemple, ce sous-module 72 comprend :
- un bloc 74 de calcul du nombre de démarrages vus par la courroie de l'alternodémarreur 12,
- un bloc 76 de calcul du couple résistant instantané exercé par les différents accessoires entraînés par la courroie du dispositif du démarreur, et
- un bloc 78 de calcul du nombre de tours effectués par la courroie du démarreur 12.

Le module 34 comprend un sous-module 80 de mesure et d'estimation des sollicitations subies par le moteur 10, ces sollicitations étant causées par la combustion de carburant dans les chambres de combustion. Par exemple, ce sous-module 80 comprend :
- un bloc 82 d'acquisition de la température mesurée des gaz d'échappement,
- un estimateur 84 de la quantité de chaleur qui traverse les pistons du moteur 10 par unité de temps,
- un estimateur 86 de la quantité de chaleur qui traverse la culasse du moteur 10 par unité de temps,
- un estimateur 86 de la quantité de chaleur qui traverse le carter cylindre du moteur par unité de temps, et
- un estimateur 88 de la pression maximale atteinte dans chaque chambre de combustion lors d'un cycle de combustion.

Les estimateurs 84, 86 et 88 construisent leurs estimations respectives à partir des mesures des données du sous-module 50 et des valeurs du régime du moteur et du couple du moteur.
- selon l'une quelconque des revendications précédentes un estimateur 92 de la température actuelle de la matière en un point particulier du carter de la turbine du turbocompresseur,
- un estimateur 94 de la température de la matière en un point du collecteur d'échappement du moteur 10,
- un estimateur 96 de la température de la matière en un point d'un piston du moteur 10,
- un estimateur 96 de la température de la matière en un point de la culasse du moteur 10,
- un estimateur 96 de la température de la matière en un point du carter cylindre du moteur 10,

Les estimateurs 92 et 94 construisent leurs estimations respectives à partir :
- de la vitesse du véhicule 2 acquise par le bloc 58,
- de l'état de fonctionnement du groupe moto-ventilateur acquis par le bloc 60,
- du débit des gaz d'échappement acquis par le bloc 62,
- de la température d'eau de refroidissement du moteur 10 acquis par le bloc 64, et
- de la température des gaz d'échappement acquis par le bloc 82.

L'estimateur 96 estime la température de la matière en un point du piston à partir :
- de la température de l'eau de refroidissement du moteur 10 acquis par le bloc 64,
- de la température de l'huile du carter du moteur 10 acquis par le bloc 66, et
- de l'estimation de la quantité de chaleur traversant le piston par unité de temps délivrée par l'estimateur 84.

A partir des différentes mesures et estimations réalisées par le module 34, le constructeur 36 construit différents indicateurs de fatigue pour différentes pièces de la chaîne 4 de traction. Par exemple, à cet effet, le constructeur 36 comprend :
- un sous-module 100 de construction d'indicateurs de fatigue pour la courroie de l'alternodémarreur 12 et pour le turbocompresseur 14,
- un sous-module 102 de construction d'indicateurs de fatigue pour les pièces de la chaîne 4 soumises à des variations importantes de température, et
- un sous-module 104 de construction d'indicateurs de fatigue pour les pièces de la chaîne 4 soumises à des efforts répétitifs provoqués par la pression des les cycles de combustion du moteur.

Ici, le sous-module 102 comprend :
- un compteur 110 de cycles thermiques subis par le carter de la turbine du turbocompresseur,
- un bloc 112 de construction d'un indicateur de fatigue du carter de la turbine du turbocompresseur 14 à partir des informations délivrées par le compteur 110,
- un compteur 114 du nombre de cycles thermiques subis par le collecteur d'échappement du moteur,
- un bloc 116 de construction d'un indicateur de fatigue du collecteur d'échappement du moteur 10 à partir des informations délivrées par le compteur 114,
- un compteur 118 du nombre de cycles thermiques subis par la culasse du moteur 10, et
- un bloc 120 de construction d'un indicateur de fatigue de la culasse du moteur 10 à partir des informations délivrées par le compteur 118.

Les compteurs 110, 114 et 118 dénombrent le nombre de cycles thermiques à partir des températures estimées, respectivement, par les estimateurs 92, 94 et 86. Le dénombrement des cycles thermiques est par exemple réalisé à l'aide de la méthode de comptage de cycles connue sous le nom « rainflow ». Cette méthode permet non seulement d'identifier chaque cycle thermique mais également de relever son amplitude.

A chaque fois qu'un nouveau cycle thermique est identifié par l'un des compteurs 110, 114 ou 118, cette information ainsi que l'amplitude du cycle thermique détecté sont transmis au bloc de construction de l'indicateur correspondant. Les blocs 112, 116 et 120 construisent leurs indicateurs de fatigue respectifs en cumulant des valeurs instantanée d'endommagement obtenues à partir de l'amplitude de chaque cycle thermique. Chaque valeur instantanée d'endommagement associée à une amplitude donnée d'un cycle thermique est obtenue à l'aide d'une des lois 44 d'endommagement enregistrées dans la mémoire 26.

Par exemple, la figure 3 représente graphiquement un exemple de loi d'endommagement permettant d'associer une valeur instantanée E d'endommagement à l'amplitude A d'un cycle thermique du carter du turbocompresseur 14. Typiquement, plus l'amplitude du cycle thermique subi est importante plus la valeur d'endommagement instantanée est importante. Ici, la loi d'endommagement représentée est une fonction monotone croissante. Par exemple, cette loi d'endommagement est une fonction exponentielle représentée sur la figure 3 pour une courbe 124. Dans l'exemple décrit ici, cette loi d'endommagement associe aux valeurs A1 et A2 d'amplitude de cycles thermiques, respectivement, les valeurs instantanées d'endommagement E1 et E2.

Cette loi pourra également avoir une allure différente, avec un maximum ou un minimum local, pour des cas de fonctionnement avec des régimes critiques (concernant par exemple l'estimation de l'endommagement d'une courroie ou du vilebrequin qui présentent des modes propres). Ces lois d'endommagement pourront également être multi-variables.

Pour construire la valeur de l'indicateur de fatigue du carter de la turbine du turbocompresseur, le bloc 112 détermine dans un premier temps la valeur instantanée d'endommagement associée à l'amplitude du cycle thermique que vient de subir le carter de la turbine. Ensuite, il ajoute cette valeur instantanée d'endommagement au cumul des valeurs instantanées d'endommagement précédemment calculées. Ainsi, au fur et à mesure de l'utilisation du moteur 10, la valeur de l'indicateur de fatigue du carter de la turbine est construite par l'accumulation des valeurs instantanées E obtenues à partir de la loi représentée sur la figure 3. Cette façon de procéder permet donc de tenir compte aussi bien des cycles thermiques ayant une petite amplitude que des cycles thermiques ayant une grande amplitude. On comprend donc que la valeur de l'indicateur de fatigue dépend à la fois du nombre de cycles thermiques subis mais également de l'amplitude de chacun de ces cycles thermiques.

Les blocs 116 et 120 construisent leurs indicateurs de fatigue respectifs de façon similaire à ce qui était décrit en regard du bloc 112. Le sous-module 100 comprend :
- un bloc 130 de construction d'un indicateur de fatigue de la courroie de l'alternodémarreur 12, et
- un bloc 132 de construction d'un indicateur de fatigue d'un palier de la turbine du turbocompresseur.

L'indicateur de fatigue des courroies du démarreur 12 est ici construit à partir des mesures acquises par les blocs 76 et 78. Comme pour le bloc 112, le bloc 130 utilise une loi 44 d'endommagement pour convertir les mesures acquises par les blocs 76 et 78 en une valeur instantanée d'endommagement. Ensuite, le bloc 130 accumule, au fur et à mesure de l'utilisation de la courroie de l'alternodémarreur 12 ces valeurs instantanées d'endommagement pour former l'indicateur de fatigue de cette courroie. Dans le cas particulier du bloc 130, la loi d'endommagement associe une valeur instantanée d'endommagement aux valeurs mesurées pour le couple résistant et le nombre de tours de la courroie. Dans ce cas, la loi d'endommagement est une fonction multi-variable associant à plusieurs variables d'entrée une seule valeur instantanée d'endommagement. Une telle fonction multi-variable peut être enregistrée dans la mémoire 26 sous la forme d'une table à plusieurs dimensions.

Le bloc 132 construit l'indicateur de fatigue du palier de la turbine du turbocompresseur 14 à partir des mesures acquises par les blocs 52, 54, 56 et 66 ainsi qu'à partir de l'estimation établie par l'estimateur 92. Comme les blocs précédents de construction d'un indicateur de fatigue, le bloc 132 associe aux mesures et aux estimations acquises une valeur instantanée d'endommagement à l'aide d'une loi d'endommagement 44 préenregistrée dans la mémoire 26 puis cumule les valeurs successives de valeurs instantanées d'endommagement pour obtenir la valeur de l'indicateur de fatigue.

Le sous-module 104 comprend :
- un bloc 134 de construction d'un indicateur de fatigue de la culasse et du carter cylindre du moteur,
- un bloc 136 de construction d'un indicateur de fatigue de vis reliant le carter du moteur au bloc cylindre de ce moteur, et
- un bloc 138 de construction d'un indicateur de fatigue de l'attelage mobile (vilebrequin, bielle entrainement des masses d'équilibrage) du moteur 10 permettant d'annuler les vibrations de ce moteur provoquées par la rotation du vilebrequin.

Le bloc 134 construit son indicateur de fatigue à partir des estimations réalisées par les estimateurs 86 et 88. Le bloc 136 construit son indicateur de fatigue à partir de l'estimation construite par le bloc 88. Enfin, le bloc 138 construit son indicateur de fatigue à partir des mesures acquises par les blocs 68 et 70.

La construction des indicateurs de fatigue par les blocs 134, 136 et 138 est similaire à ce qui a été décrit en regard des blocs 112 et 130. Ici, les lois d'endommagement sont déterminées de façon expérimentale avant d'être enregistrées dans la mémoire 26.

Le superviseur 38 reçoit les indicateurs de fatigue construits par les blocs 112, 116, 120, 134, 136 et 138. Lorsque la valeur de l'un de ces indicateurs de fatigue dépasse un seuil prédéterminé, le superviseur 38 commande les organes de l'ensemble 16 pour réduire les performances du moteur 10 afin de limiter la fatigue subie par les pièces dont l'indicateur de fatigue dépasse le seuil prédéterminé. Le superviseur 40 reçoit les indicateurs de fatigue établis par les blocs 130 et 132 ainsi que le nombre de démarrages subis par la courroie de l'alternodémarreur acquis par le bloc 74. Le limiteur 42 reçoit quant à lui les températures estimées par les estimateurs 92, 94 et 96.

Le fonctionnement du dispositif 20 va maintenant être décrit plus en détail en regard du procédé de la figure 4. Initialement, lors d'une étape 150, les capteurs de l'ensemble 22 mesurent différentes grandeurs physiques de la chaîne de traction 4. Ensuite, lors d'une étape 152, le module 34 acquiert les mesures réalisées et estime la valeur des grandeurs physiques qui ne sont pas directement mesurées par les capteurs de l'ensemble 22.

Lors d'une étape 154, le constructeur 36 calcule la nouvelle valeur des différents indicateurs de fatigue à partir des mesures et estimations délivrées par le module 34. Ces nouvelles valeurs des indicateurs de fatigue sont délivrées aux superviseurs 38 et 40.

Lors d'une étape 156, le superviseur 38 compare la valeur des indicateurs de fatigue à des seuils prédéterminés respectifs. Si l'un de ces seuils est atteint par l'un des indicateurs de fatigue, alors le superviseur 38 commande, lors de l'étape 156, des organes de l'ensemble 16 pour limiter les contraintes mécaniques subies par la pièce dont l'indicateur de fatigue a dépassé le seuil prédéterminé. Par exemple, lors de l'étape 156, le superviseur 38 commande les organes de l'ensemble 16 pour limiter la puissance du moteur 10. Ceci permet notamment, de réduire les sollicitations thermiques subies par les différentes pièces du moteur 10 telles que la culasse, le piston ou encore le collecteur d'échappement. La limitation de la puissance du moteur 10 peut être obtenue en modifiant les quantités de carburant injectées, ou en modifiant les instants d'injection de ce carburant lors des cycles de combustion.

En parallèle, lors d'une étape 158, le superviseur 40 compare la valeur des indicateurs de fatigue à des seuils prédéterminés. Dès que l'un de ces seuils prédéterminés est atteint par l'un des indicateurs de fatigue, le superviseur 40 commande, lors de l'étape 158, des organes de l'ensemble 16 pour limiter le fonctionnement de l'alternodémarreur 12. Par exemple, lors de l'étape 158, le superviseur 40 interdit l'arrêt du moteur 10 si la température du carter de la turbine du turbocompresseur 14 est supérieure à un seuil prédéterminé. Ainsi, le nombre d'arrêts du moteur 10 à chaud est limité, ce qui limite l'usure de la courroie de l'alternodémarreur 12 et l'usure par échauffement excessif des paliers de la turbine du turbocompresseur.

Les limitations du fonctionnement du moteur 10 et de l'alternodémarreur 12 imposées par les superviseurs 38 et 40 perdurent sur de long période de temps supérieures à plusieurs heures. Par exemple, ces limitations perdurent aussi longtemps que les pièces dont la fatigue est excessives n'ont pas été remplacées.

En parallèle de l'étape 154, lors d'une étape 160, les estimations des températures du carter de la turbine du turbocompresseur, du collecteur d'échappement et de la température du piston sont délivrées directement au limiteur 42. Lors de l'étape 160, le limiteur 42 compare ces températures estimées à des seuils critiques préenregistrés. Si l'une des températures estimées dépasse ce seuil critique, alors, lors de l'étape 160, le limiteur 42 commande les organes de l'ensemble 16 pour limiter immédiatement la température de ces pièces du moteur. Par exemple, lors de l'étape 160, le limiteur 42 commande les organes de l'ensemble 16 pour limiter la puissance du moteur 10. Contrairement à l'étape 156, cette limitation des performances du moteur 10 est uniquement temporaire. En effet, cette limitation imposée par le limiteur 42 dure uniquement tant que l'une des températures estimées reçues dépasse le seuil critique. Par contre, dès que les températures estimées retombent au-dessous de ce seuil critique, le limiteur 42 ne limite plus les performances du moteur 10.

Enfin, la valeur des indicateurs de fatigue peut également être utilisée, lors d'une étape 162 pour réaliser de la maintenance préventive. Par exemple, lors de l'étape 162, l'interface homme-machine 30 est connectée au connecteur 28 du dispositif 20. Ensuite, les valeurs actuelles des indicateurs de fatigue sont transmises à l'interface homme-machine 30 qui les affiche sous une forme directement perceptible et compréhensible par un opérateur de maintenance. En fonction des valeurs ainsi affichées, l'opérateur de maintenance décide de remplacer une ou plusieurs pièces ayant dépassé un seuil de fatigue prédéterminé ou proche de ce seuil de fatigue prédéterminé. Un tel remplacement préventif des pièces de la chaîne 4 de traction permet d'éviter toute panne du véhicule.

De nombreux autres modes de réalisation son possibles. Par exemple, ce qui a été décrit ci-dessus peut être appliqué à un véhicule dépourvu d'alternodémarreur 12. Dans ce cas, les sous-modules 72, 100 et le superviseur 40 sont omis. De façon similaire, il n'est pas nécessaire d'établir autant d'indicateurs de fatigue que ce qui a été décrit ci-dessus. Dans un cas extrêmement simplifié, un seul d'indicateur de fatigue est construit. A l'inverse, des indicateurs de fatigue supplémentaires peuvent être construits. Par exemple, des indicateurs de fatigue peuvent être construits pour les engrenages de la boîte de vitesses ou pour des pièces de la chaîne de transmission du véhicule. Certains estimateurs décrits ici peuvent être remplacés par des capteurs et vice versa. Le limiteur 42 peut être adapté pour limiter temporairement les performances du moteur 10 en réponse au dépassement d'un seuil prédéterminé par une valeur instantanée d'endommagement.

## Revendications

1. Procédé de prévention de l'endommagement d'une pièce d'un véhicule soumise à des variations de température et à un chargement mécanique, à savoir un carter de turbocompresseur d'un véhicule, ou un collecteur d'échappement d'un véhicule, ou un palier de turbine de turbocompresseur d'un véhicule, ou une culasse d'un moteur thermique, ce procédé comportant la construction (150 - 154) d'un indicateur de fatigue, la limitation (156) de la puissance du véhicule ou l'indication (162) de la nécessité de remplacer cette pièce en réponse au dépassement par cet indicateur d'un premier seuil prédéterminé,
**caractérisé en ce que** la construction d'un indicateur de fatigue est réalisée à l'aide d'un procédé comprenant, lors de l'utilisation de la pièce, la mesure (150, 152) des variations de température subies par cette pièce qui engendrent des contraintes mécaniques dans cette pièce, et le calcul (154) de la valeur de l'indicateur de fatigue de cette pièce en fonction du nombre et de l'amplitude de ces variations de température mesurées,
ledit procédé comprenant pour chaque variation de température mesurée, l'association (154) d'une valeur instantanée d'endommagement fonction de l'amplitude de cette variation de température à l'aide d'une loi d'endommagement préétablie associant à chaque amplitude d'une variation de température une valeur instantanée d'endommagement, et le cumul (154) au cours du temps des valeurs instantanées d'endommagement associées à chaque variation de température mesurée pour calculer la valeur de l'indicateur de fatigue,
ledit procédé étant mis en oeuvre par un dispositif (20) de prévention d'endommagement et de maintenance préventive de ladite ou desdites pièces et comprenant un ensemble (22) de capteurs, dont un capteur de température, un calculateur électronique (24) raccordé aux capteurs (22), une mémoire (26) raccordée au calculateur (24), et un connecteur (28) destiné à être raccordé à une interface homme-machine (30).

2. Procédé selon la revendication 1, **caractérisé en ce que** le calculateur (24) comprend un module (34) d'acquisition des différentes mesures réalisées par les capteurs de l'ensemble (22), **en ce que** ce module est également apte à estimer, à partir de ces différentes mesures, d'autres grandeurs physiques représentatives de contraintes subies par ladite ou lesdites pièces et à délivrer les différentes mesures et estimations réalisées à l'entrée d'un module (36) d'indicateurs de fatigue, qui construit à partir de ces mesures et estimations des indicateurs de fatigue pour ladite ou lesdites pièces.

3. Procédé selon l'une des revendications précédentes, **caractérisé en ce que** le calculateur (24) comprend un superviseur (38) du fonctionnement d'un moteur (10) comprenant ladite ou lesdites pièces, ledit superviseur (38) réduisant les performances dudit moteur en fonction de la valeur des indicateurs de fatigue des pièces du moteur pour prévenir tout endommagement d'une de ces pièces.

4. Procédé selon l'une des revendications précédentes, dans lequel la mesure d'une variation de température comprend l'identification d'un cycle thermique et le relevé de l'amplitude de ce cycle thermique.

5. Procédé selon l'une des revendications précédentes, appliqué à un carter de turbocompresseur d'un véhicule, ou un collecteur d'échappement d'un véhicule, ou un palier de turbine de turbocompresseur d'un véhicule, ou une culasse d'un moteur thermique, comprenant :
- la mesure ou l'estimation (150, 152) d'une pression maximale atteinte lors de chaque cycle de combustion d'un carburant dans une chambre de combustion d'un moteur à combustion, et
- pour chaque cycle, l'association (154) d'une valeur instantanée d'endommagement fonction de la pression maximale atteinte lors de ce cycle à l'aide d'une loi d'endommagement préétablie associant une valeur instantanée d'endommagement à chaque pression maximale atteinte lors d'un cycle, tout en prenant en compte la mesure de la température de fonctionnement de la pièce obtenue selon les revendications 1, 2 ou 3 et
- le cumul (154) au cours du temps de ces valeurs instantanées d'endommagement associées à chaque pression maximale atteinte au cours d'un cycle pour calculer un indicateur de fatigue d'une culasse ou d'un carter ou de l'attelage mobile du moteur à combustion.

6. Procédé selon l'une des revendications précédentes, **caractérisé en ce qu'**il est appliqué à une courroie, dans lequel le procédé comprend pour chaque tour de la courroie, l'association (154) d'une valeur instantanée d'endommagement en fonction du nombre de tours réalisés par la courroie et du couple résistant exercé sur la courroie pendant ces tours et du nombre d'arrêts et de redémarrages, à l'aide d'une loi d'endommagement préétablie associant au nombre de tours réalisés et au couple résistant exercé une valeur instantanée d'endommagement, et le cumul (154) au cours du temps de ces valeurs instantanées d'endommagement pour obtenir un indicateur de fatigue de cette courroie.

7. Procédé selon l'une quelconque des revendications précédentes, comprenant la mesure (150, 152) de la température subie par cette pièce et, la limitation instantanée (160) de la puissance du véhicule en réponse à un dépassement par la température mesurée d'un second seuil prédéterminé.

## Patentansprüche

1. Verfahren zum Verhindern einer Beschädigung eines Werkstücks eines Kraftfahrzeugs, das Temperaturvariationen und einer mechanischen Ladung unterworfen ist, nämlich eines Turboverdichtergehäuses eines Fahrzeugs oder eines Auspuffkrümmers eines Fahrzeugs oder eines Turboverdichter-Turbinenlagers eines Fahrzeugs oder eines Zylinderkopfs eines Verbrennungsmotors, wobei dieses Verfahren das Konstruieren (150-154) eines Ermüdungsanzeigers, die Begrenzung (156) der Leistung des Fahrzeugs oder die Anzeige (162) der Notwendigkeit, dieses Werkstück als Reaktion auf das Überschreiten eines ersten vorbestimmten Schwellenwerts durch diese Anzeigevorrichtung umfasst, **dadurch gekennzeichnet, dass** die Konstruktion eines Ermüdungsanzeigers mit Hilfe eines Verfahrens ausgeführt wird, das beim Gebrauch des Werkstücks die Messung (150, 152) der Temperaturvariationen umfasst, die von diesem Werkstück erfahren werden, die mechanische Belastungen in diesem Werkstück hervorrufen, und die Berechnung (154) des Werts des Ermüdungsanzeigers dieses Werkstücks in Abhängigkeit von der Anzahl und der Amplitude dieser gemessenen Temperaturvariationen, wobei das Verfahren für jede gemessene Temperaturvariation die Assoziation (154) eines Beschädigungsmomentanwerts in Abhängigkeit von der Amplitude dieser Temperaturvariation mit Hilfe eines vorab festgelegten Beschädigungsgesetzes, das einen Beschädigungsmomentanwert mit jeder Amplitude eine Temperaturvariation assoziiert, und die Summierung (154) im Laufe der Zeit der Beschädigungsmomentanwerte, die mit jeder gemessenen Temperaturvariation assoziiert sind, um den Wert des Ermüdungsanzeigers zu berechnen, wobei das Verfahren von einer Vorrichtung (20) zum Verhindern von Beschädigung und zur vorbeugenden Wartung des Werkstücks oder der Werkstücke umgesetzt wird, und eine Einheit (22) von Sensoren umfasst, darunter ein Temperatursensor, ein elektronischer Rechner (24), der an die Sensoren (22) angeschlossen ist, ein Speicher (26), der an den Rechner (24) angeschlossen ist, und ein Steckverbinder (28), der dazu bestimmt ist, an eine Mensch-Maschinenschnittstelle (30) angeschlossen zu sein.

2. Verfahren nach Anspruch 1, **dadurch gekennzeichnet, dass** der Rechner (24) ein Modul (34) zum Erfassen der unterschiedlichen Messungen umfasst, die von den Sensoren der Einheit (22) ausgeführt werden, dass dieses Modul auch geeignet ist, um ausgehend von diesen unterschiedlichen Messungen andere physikalische Größen zu schätzen, die für Beanspruchungen repräsentativ sind, die das oder die Werkstücke erfahren, und die ausgeführten unterschiedlichen Messungen und Schätzungen an dem Eingang eines Moduls (36) von Ermüdunganzeigern zu liefern, das ausgehend von diesen Messungen und Schätzungen Ermüdungsanzeiger für das oder die Werkstücke konstruiert.

3. Verfahren nach einem der vorhergehenden Ansprüche, **dadurch gekennzeichnet, dass** der Rechner (24) einen Supervisor (38) des Funktionierens eines Motors (10), der das oder die Werkstücke umfasst, umfasst, wobei der Supervisor (38) die Leistungen des Motors in Abhängigkeit von dem Wert der Ermüdungsanzeiger der Werkstücke des Motors verringert, um jeder Beschädigung eines dieser Werkstücke vorzubeugen.

4. Verfahren nach einem der vorhergehenden Ansprüche, wobei die Messung einer Temperaturvariation die Identifikation eines Wärmezyklus und das Erheben der Amplitude dieses Wärmezyklus umfasst.

5. Verfahren nach einem der vorhergehenden Ansprüche, das an ein Turboverdichtergehäuse eines Fahrzeugs oder einen Auspuffkrümmer eines Fahrzeugs oder ein Turboverdichter-Turbinenlager eines Fahrzeugs oder einen Zylinderkopf eines Verbrennungsmotors angewandt wird, das Folgendes umfasst:
- das Messen oder Schätzen (150, 152) eines maximalen Drucks, der bei jedem Verbrennungszyklus eines Kraftstoffs in einer Brennkammer eines Verbrennungsmotors erreicht wird, und
- für jeden Zyklus die Assoziation (154) eines Beschädigungsmomentanwerts in Abhängigkeit von dem maximalen Druck, der bei diesem Zyklus erreicht wird, mit Hilfe eines vorab festgelegten Beschädigungsgesetzes, das einen Beschädigungsmomentanwert mit jedem maximalen Druck, der bei einem Zyklus erreicht wird, unter gleichzeitiger Berücksichtigung der Messung der Betriebstemperatur des Werkstücks, die gemäß den Ansprüchen 1, 2 oder 3 erhalten wird, assoziiert, und
- Summieren (154) im Laufe der Zeit dieser Beschädigungsmomentanwerte, die mit jedem maximalen Druck, der im Laufe eines Zyklus erreicht wird, assoziiert sind, um einen Ermüdungsanzeiger eines Zylinderkopfs oder eines Gehäuses oder der beweglichen Kopplung des Verbrennungsmotors zu berechnen.

6. Verfahren nach einem der vorhergehenden Ansprüche, **dadurch gekennzeichnet, dass** es an einen Riemen angewandt wird, wobei das Verfahren für jede Umdrehung des Riemens die Assoziation (154) eines Beschädigungsmomentanwerts in Abhängigkeit von der Anzahl von Umdrehungen, die von dem Riemen ausgeführt wird, und dem Widerstandsmoment, das auf den Riemen während dieser Umdrehungen ausgeübt wird, und der Anzahl von Stillständen und Neustarten mit Hilfe eines vorab festgelegten Beschädigungsgesetzes umfasst, das mit der Anzahl ausgeführter Umdrehungen und dem ausgeübten Widerstandsmoment einen Beschädigungsmomentanwert assoziiert, und die Berechnung (154) im Laufe der Zeit dieser Beschädigungsmomentanwerte, um einen Ermüdungsanzeiger dieses Riemens zu erhalten.

7. Verfahren nach einem der vorhergehenden Ansprüche, das das Messen (150, 152) der Temperatur, die von diesem Werkstück erfahren wird, und die Momentaneinschränkung (160) der Leistung des Fahrzeugs als Reaktion auf ein Überschreiten eines zweiten vorbestimmten Schwellenwerts durch die gemessene Temperatur umfasst.

## Claims

1. A method for preventing damage to a part of a vehicle subject to variations in temperature and to a mechanical load, namely a turbocharger housing of a vehicle or an exhaust manifold of a vehicle, or a turbine bearing of a turbocharger of a vehicle, or a cylinder head of a heat engine, this method comprising the construction (150-154) of a fatigue indicator, the limitation (156) of the power of the vehicle or the indication (162) of the need to replace this part in response to the exceeding by this indicator of a first predetermined threshold,
**characterized in that** the construction of a fatigue indicator is realized by means of a method including, during the use of the part, the measurement (150, 152) of the variations in temperature undergone by this part, which bring about mechanical stresses in this part, and the calculation (154) of the value of the fatigue indicator of this part as a function of the number and of the magnitude of these measured variations in temperature,
said method including for each measured variation in temperature the association (154) of an instantaneous damage value as a function of the magnitude of this variation in temperature by means of a preestablished damage law, associating with each magnitude of a temperature variation an instantaneous damage value, and the total (154) over time of the instantaneous damage values associated with each measured variation in temperature, to calculate the value of the fatigue indicator,
said method being implemented by a device (20) for damage prevention and for preventive maintaining of said part(s), and including an assembly (22) of sensors, including a temperature sensor, an electronic computer (24) connected to the sensors (22), a memory (26) connected to the computer (24), and a connector (28) intended to be connected to a man-machine interface (30).

2. The method according to Claim 1, **characterized in that** the computer (24) includes a module (34) for acquisition of the various measurements carried out by the sensors of the assembly (22), **in that** this module is also able to estimate, from these various measurements, other physical quantities representative of stresses undergone by said part(s) and to deliver the various measurements and estimations carried out to the inlet of a module (36) of fatigue indicators, which constructs from these measurements and estimations fatigue indicators for said part(s).

3. The method according to one of the preceding claims, **characterized in that** the computer (24) includes a supervisor (38) of the functioning of an engine (10) including said part(s), said supervisor (38) reducing the performance of said engine as a function of the value of the fatigue indicators of the parts of the engine, to prevent any damage to one of these parts.

4. The method according to one of the preceding claims, in which the measurement of a variation in temperature includes the identification of a thermal cycle and the reading of the magnitude of this thermal cycle.

5. The method according to one of the preceding claims, applied to a turbocharger housing of a vehicle or an exhaust manifold of a vehicle, or a turbine bearing of a turbocharger of a vehicle, or a cylinder head of a heat engine, including:
- the measurement or estimation (150, 152) of a maximum pressure reached during each combustion cycle of a fuel in a combustion chamber of a combustion engine, and
- for each cycle, the association (154) of an instantaneous damage value as a function of the maximum pressure reached during this cycle by means of a preestablished damage law associating an instantaneous damage value to each maximum pressure reached during a cycle, whilst taking into account the measurement of the operating temperature of the part obtained according to Claims 1, 2 or 3 and
- the total (154) over time of these instantaneous damage values associated with each maximum pressure reached during a cycle to calculate a fatigue indicator of a cylinder head or of a housing or of the moving parts of the combustion engine.

6. The method according to one of preceding claims, **characterized in that** it is applied to a belt, in which the method includes for each turn of the belt, the association (154) of an instantaneous damage value as a function of the number of turns carried out by the belt and of the resisting torque exerted on the belt during these turns and the number of stops and restarts, by means of a preestablished damage law associating to the number of turns carried out and to the resisting torque exerted an instantaneous damage value, and the total (154) over time of these instantaneous damage values to obtain a fatigue indicator of this belt.

7. The method according to any one of the preceding claims, including the measurement (150, 152) of the temperature undergone by this part and, the instantaneous limitation (160) of the power of the vehicle in response to an exceeding by the measured temperature of a second predetermined threshold.
